# EUROPEAN PATENT APPLICATION

(11) **EP 2 555 374 A1**
(43) Date of publication of application: **06.02.2013**
(21) Application number: 11762495.7
(22) Date of filing: 07.03.2011
(51) Int. Cl.: H02J 9/06, G01D 5/244, H01M 10/44, H02J 7/00, H02J 7/34

(54) **BACKUP POWER SUPPLY DEVICE AND POWER OUTPUT METHOD**

(30) Priority: 29.03.2010 JP 2010075303
(71) Applicant: Toshiba Kikai Kabushiki Kaisha, Chiyoda-ku Tokyo 100-0011 (JP)
(72) Inventor: MATSUNAGA, Wataru, Numazu-shi Shizuoka 410-8510 (JP); KATSUMATA, Kazuhiro, Numazu-shi Shizuoka 410-8510 (JP); YAMAGUCHI, Yutaka, Numazu-shi Shizuoka 410-8510 (JP)
(74) Representative: HOFFMANN EITLE
(86) International application number: PCT/JP2011/055246
(87) International publication number: WO 2011/122255

(57) **Abstract**

A backup power supply device configured to supply an electric power for backup to an optical encoder 11 when a main power supply 13 for driving the optical encoder 11 breaks down, the backup power supply device comprises: a battery 12 configured to storage a DC power; a capacitor 33 configured to storage a DC power, the capacitor 33 configured to supply an electric power for backup to the optical encoder 11 when the battery 12 cannot supply the electric power thereof; a discharge device 34 configured to discharge the electric power charged in the battery 12; and a periodical discharge controller 35 configured to perform control to intermittently output the electric power charged in the battery 12 to the discharge device 34 to consume the battery power.

## Description

### [TECHNICAL FIELD]

The present invention relates to a backup power supply device and a power output method, which supply an electric power for backup when a main power supply for driving an optical encoder breaks down.

### [BACKGROUND ART]

An optical encoder used as a position detector generally operates by an electric power supplied from a main power supply such as a commercial power or the like. The optical encoder is connected to a backup power supply device to continue and maintain its operating state even when the main power supply cannot supply the electric power due to a power failure or the like. In other words, when a power failure occurs and the main power supply cannot supply an electric power, the supply of electric power is switched to a supply from the backup power supply device, thereby operating the optical encoder.

The backup power supply device mostly uses a lithium battery which can be used continuously for a long time. However, when the lithium battery is left in a state where the electric power thereof is not consumed for a long time, molecules of an electrolyte react with lithium ions on an electrode surface, a passive film is formed thereon, and a spontaneous discharge may be suppressed by the passive film. With this reason, although the lithium battery has a long reliability as a backup power supply, if the lithium battery is connected to a load in a state where a large amount of passive films is formed, a so-called voltage delay phenomenon occurs. In this phenomenon, the passive films behave as a resistor to block an electric current flow, and a temporal decrease in voltage is induced. Accordingly, it will raise a problem in that an operation of the encoder becomes bad.

In order to prevent an occurrence of the voltage delay phenomenon, Japanese Patent Application Laid-open Publication Nos. 2004-325125 (Patent literature 1) and 2005-312089 (Patent literature 2) have been proposed some techniques.

In Patent literature 1, a lithium battery is provided as a backup power supply. The lithium battery intermittently supplies an electric power to a light emitting body (i.e. a light emitting device (LED) or the like), and the electric power of the lithium battery is routinely consumed to prevent the voltage delay phenomenon. However, in this method, supplying of an electric power to the light emitting body is routinely switched between from a main power supply and from the lithium battery. Therefore, there is a disadvantage in that a complicated control is required for the switching operation. In addition, this method means to use both the main power supply and the lithium battery to operate the light emitting body. Therefore, when a charging capacity of the lithium battery decreases even in a state where the main power supply still properly operates, it may be impossible to properly operate the light emitting body.

In Patent literature 2, a discharge of an electric power charged in an external battery is carried out by use of a resistor provided outside an optical encoder. However, since Patent literature 2 describes a configuration in that a predetermined electric power is consumed in an installation of the external battery and thereafter an electric power is continuously consumed by the resistor, the electric power consumption becomes large, thereby creating a disadvantage in that the lifetime of the external battery is reduced.

### [Citation List]

### [Patent Literature]

Patent literature 1: JP 2004-325125A.
Patent literature 2: JP 2005-312089A.

### [Summary of Invention]

### [Technical Problem]

As mentioned above, in the conventional technique described in Patent literature 1, it may become impossible to operate the light emitting body when the charge charging capacity decreases. In the conventional technique described in Patent literature 2, there is a disadvantage in that the lifetime of the external battery is reduced because the electric power of the external battery is continuously consumed.

The present invention has been made to solve the existing problems as described above, and the object thereof is to provide a backup power supply device and a power output method of the backup power supply device, which can prevent occurrence of the voltage delay phenomenon and also can prevent a consumption amount of the electric power from being unexpectedly large.

### [Solution to Problem]

A first aspect of the present invention is a backup power supply device configured to supply an electric power for backup to an optical encoder when a main power supply for driving the optical encoder breaks down. The backup power supply device comprises: a battery configured to storage a DC power; a capacitor configured to storage a DC power, the capacitor configured to supply an electric power for backup to the optical encoder when the battery cannot supply the electric power thereof; a discharge device configured to discharge the electric power charged in the battery; and a periodical discharge controller configured to perform control to intermittently output the electric power charged in the battery to the discharge device to consume the battery power.

The backup power supply may further comprise a backflow prevention circuit configured to block a discharge of the electric power charged in the capacitor when the electric power charged in the battery is supplied to the optical encoder.

The backup power supply device may further comprises a forced discharge controller configured to output the electric power charged in the battery to the discharge device to consume the battery power when an external input is given.

It is preferable that the battery is a lithium battery.

A second aspect of the present invention is a power output method for outputting an electric power of a battery provided as a backup power supply device for driving an optical encoder. The power output method comprises: supplying the electric power of the battery to the optical encoder when a main power supply for the optical encoder breaks down; and intermittently outputting the electric power of the battery to a discharge device by a periodical discharge controller to consume the electric power of the battery when the optical encoder is operating by supply of an electric power of the main power supply.

The power output method may further comprise supplying the electric power of the battery to the discharge device to consume the electric power of the battery when a forced discharge command is input by a forced discharge controller.

### [Advantageous Effects of Invention]

In the aforementioned backup power supply device and power output method, an electric power charged in the battery is periodically output to the discharge circuit, and is consumed. Therefore, it is possible to prevent occurrence of the voltage delay phenomenon in the battery, and it is possible to avoid a problem in that a required electric power cannot be supplied to the optical encoder when the electric power of the battery is output thereto in a power failure or the like.

### [Brief Description of Drawings]

Fig. 1 is an explanation diagram schematically illustrating a connection relation between an optical encoder and a motor controller in which a backup power supply device according to an embodiment of the present invention is installed.
Fig. 2 is a block diagram illustrating a detailed configuration of the backup power supply device according to an embodiment of the present invention and the motor controller for driving a motor
Fig. 3 is a block diagram illustrating a detailed configuration of a backup unit for power failure in which a battery of the backup power supply device according to an embodiment of the present invention is installed.
Fig. 4 is a flowchart indicating a battery discharge process by the backup power supply device according to an embodiment of the present invention.
Fig. 5 is a timing chart indicating a discharge timing of the battery by the backup power supply device according to the present invention.

### [Description of Embodiments]

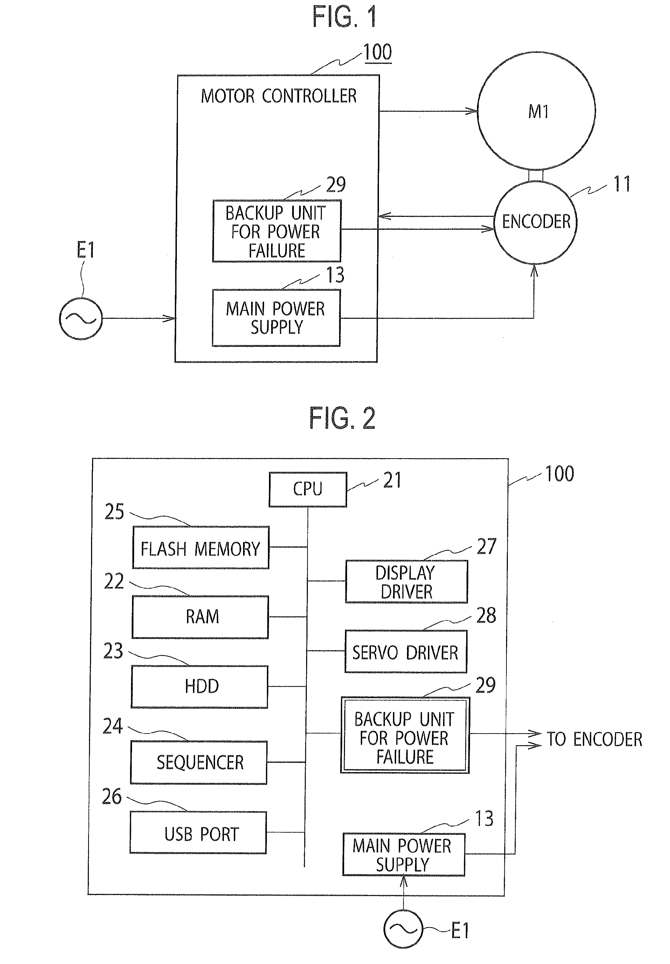

Hereinafter, an embodiment of the present invention is described with referring the drawings. Fig. 1 is an explanation diagram schematically illustrating a connection relation between a motor controller 100 and a motor M1 controlled by the motor controller 100. Here, in the motor controller 100, a backup power supply device according to an embodiment of the present invention is installed. As shown in Fig. 1, the motor M1 is connected to an optical encoder 11 for detection of a rotation angle of the motor M1. The rotation angle detected by the optical encoder 11 is output to the motor controller 100.

The motor controller 100 includes: a main power supply 13 and a backup unit 29 for power failure. The main power supply 13 supplies an electric power for driving to the optical encoder 11. The backup unit 29 supplies an electric power for backup to the optical encoder 11 in a power failure or the like where the supply of electric power from the main power supply 13 is stopped. In addition, the motor controller 100 is connected to a commercial power E1 supplying AC 100V or the like.

Fig. 2 is a block diagram illustrating a detailed configuration of the motor controller 100. As shown in Fig. 2, the motor controller 100 includes: a CPU 21, a RAM 22, a hard disk drive 23, a sequencer 24, a flash memory 25, and a USB port 26. The CPU 21 totally controls the motor M1 and the optical encoder 11. The RAM 22 temporally stores data necessary for arithmetic processing performed by the CPU 21. The hard disk drive 23 stores programs for a drive control of the motor M1. The sequencer 24 controls external input and output signals (not shown) that are input into and output from the motor controller. The flash memory 25 stores various data. The USB port 26 connects with external devices.

Further, the motor controller 100 includes: a display driver 27 which outputs image data to a display (not shown); a servo driver 28 which carries out servo control of the motor M1; and the backup unit 29 for power failure.

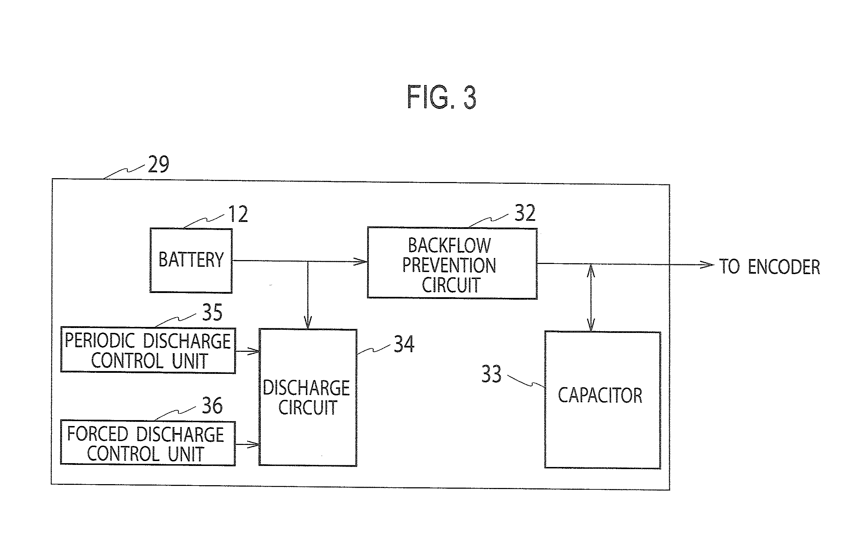

Fig. 3 is a block diagram illustrating a detailed configuration of the backup unit 29 for power failure. As shown in Fig. 3, the backup unit 29 for power failure includes: a battery 12 such as a lithium battery or the like, a discharge circuit (a discharge means, a discharge device) 34, a periodical discharge control unit (a periodical discharge control means, a periodical discharge controller) 35, and a forced discharge control unit (a forced discharge control means, a forced discharge controller) 36. The discharge circuit 34 discharges an electric power charged in the battery 12. The periodical discharge control unit 35 outputs a discharge command to the discharge circuit 34 at predetermined intervals, as described later. The forced discharge control unit 36 outputs a discharge command to the discharge circuit 34 when a discharge command signal is input from the outside.

Further, the backup unit 29 includes a capacitor 33 and a backflow prevention circuit 32. The capacitor 33 has a function to be charged with a DC power, and supplies an electric power to the optical encoder 11 when a power failure occurs or when the electric power cannot be supplied from the battery 12 due to, for example, an exchange operation of the battery 12. The backflow prevention circuit 32 is provided between the battery 12 and the capacitor 33. The backflow prevention circuit 32 blocks the electric power from being output from the capacitor 33 to the discharge circuit 34 when the discharge circuit 34 is operating.

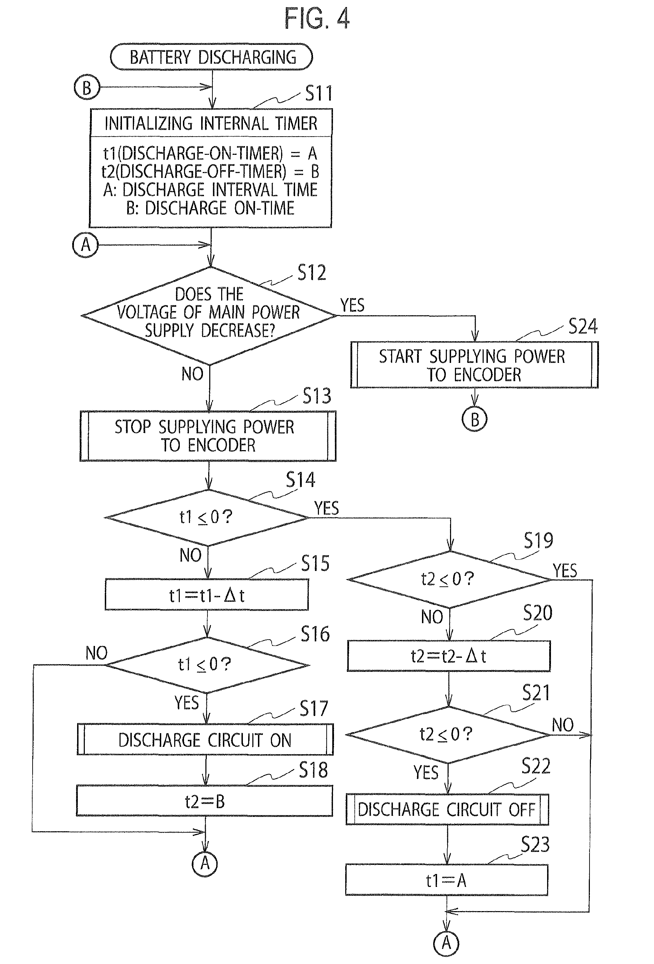

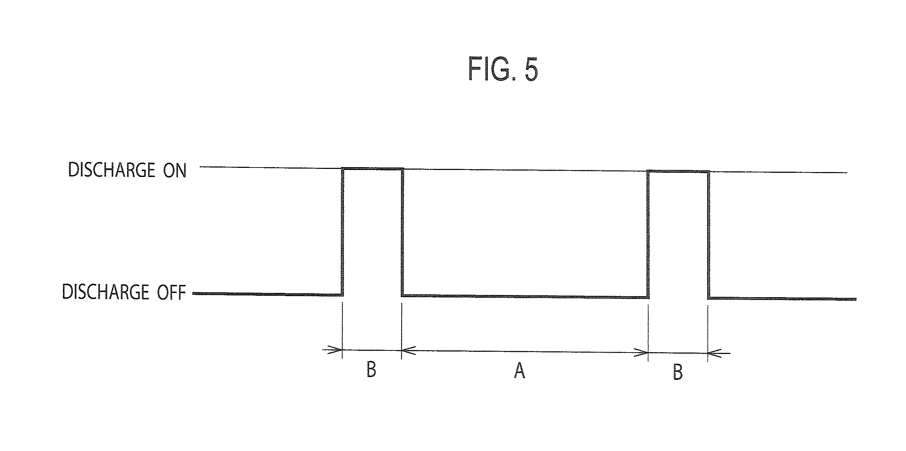

Next, a description is made about an operation of a battery discharge process by the motor controller 100 with referring the flowchart as shown in Fig. 4. At first, the CPU 21 initializes an internal timer (step S11). The internal timer is set in the RAM 22 as shown in Fig. 2, for example. In this process, a discharge-on-timer t1 is set to "A", and a discharge-off-timer t2 is set to "B". That is, periodical pulse signals are supposed as shown in Fig. 5, wherein a discharge interval time is set to "A" and a discharge-on time is set to "B" in each pulse signal.

Next, the backup unit 29 for power failure determines whether or not an output voltage of the main power supply 13 (step S12) decreases. If the output voltage of the main power supply 13 decreases ("YES" in step S12), the main power supply 13 cannot supply the electric power to the optical encoder 11. Then, the hardware is configured so as to continuously operate the optical encoder 11 by supplying the electric power from the battery 12 to the optical encoder 11 (step S24).

Alternatively, if the output voltage of the main power supply 13 does not decrease ("NO" in step S12), the backup unit 29 for power failure stops supplying the electric power to the optical encoder 11 (step S13). Further, the CPU 21 determines whether or not the timer t1 becomes zero or less (step S14). Since the timer t1 cannot be less than or equal to zero in the initial state ("NO" in step S14), the CPU 21 subtracts a sampling period At from the timer t1 (step S15).

Furthermore, the CPU 21 determines whether or not the timer t1 becomes zero or less (step S16). If the timer t1 is not zero or less ("NO" in step S16), processes from step S12 are repeated.

Thereafter, time elapses and the timer t1 becomes zero or less. When the timer t1 becomes zero or less (i.e. when the discharge interval time of "A" elapses) ("YES" in step S16), the backup unit 29 for power failure transmits the discharge command signal to the periodical discharge control unit 35, and the discharge circuit 34 is turned on by control of the periodical discharge control unit 35 (step S17). Accordingly, the electric power accumulated in the battery 12 is consumed in the discharge circuit 34. In this case, it is possible to block a current from flowing from the capacitor 33 to the discharge circuit 34 by the backflow prevention circuit 32.

When the discharge circuit 34 starts to discharge, the timer t2 is set to "B" (step S18), and the process returns to step S12.

Next, in a process of step S14, the timer t1 already becomes zero or less, thus "YES" is determined. The CPU 21 determines whether or not the timer t2 becomes zero or less (step S19). Since the timer t2 cannot be less than or equal to zero in the initial state ("NO" in step S19), the CPU 21 subtracts a sampling period Δt from the timer t2 (step S20).

Further, the CPU 21 determines whether or not the timer t2 becomes zero or less (step S21). If the timer t2 is not zero or less ("NO" in step S16), processes from step S12 are repeated.

Thereafter, time elapses and the timer t2 becomes zero or less. When the timer t2 becomes zero or less (i.e. when the discharge-on time of "B" elapses) ("YES" in step S21), the backup unit 29 for power failure transmits the discharge-stop command signal to the periodical discharge control unit 35, and the discharge circuit 34 is turned off by control of the periodical discharge control unit 35 (step S22). Accordingly, the consumption of the electric power by the discharge circuit 34 is stopped.

Thereafter, the CPU 21 sets the timer t1 to "A" (step S23), the process returns to step S12. Further, by repeating the processes from step S12 to 523, the operation as shown in Fig. 5 is repeated, wherein a discharge occurs for the time of B by the discharge circuit 34 and the discharge circuit stops for the time of "A". In other words, it is possible to consume the electric power of the battery 12 by intermittently outputting the electric power charged in the battery 12 to the discharge circuit 34.

As described above, in the backup power supply device according to the present embodiment, the electric power charged in the battery 12 is periodically output to the discharge circuit 34, and it is consumed in the discharge circuit 34. Therefore, it is possible to prevent occurrence of the voltage delay phenomenon. Accordingly, it is possible to solve the conventional problem in that a required electric power cannot be supplied when the battery 12 starts to supply the electric power thereof, and it is possible to securely supply the electric power for driving to the optical encoder 11.

Further, since the backflow prevention circuit 32 is provided between the battery 12 and capacitor 33, it is possible to prevent a current from flowing from the capacitor 33 to the discharge circuit 34 when the discharge circuit 34 is operating.

Furthermore, when the forced discharge command is input from outside, it is possible to consume the electric power of the battery 12 by control of the forced discharge control unit 36. For example, an operator can consume the electric power of the battery 12 in any timing such as when the battery 12 is exchanged or the like. Therefore, it is possible to further securely prevent occurrence of the voltage delay phenomenon.

Since a lithium battery is used as the battery 12, it is possible to extend the lifetime of the battery 12, and to prevent occurrence of the voltage delay phenomenon which especially becomes a problem in use of the lithium battery.

The explanation about the backup power supply device according to the present invention is made based on the embodiment as shown in the drawings. However, the present invention is not limited to this, and a configuration in each part thereof can be replaced to any one having the similar function.

For example, the aforementioned embodiment exemplarily uses a lithium battery as the battery 12, in which the voltage delay phenomenon is likely to occur. However, the present invention is not limited to the lithium battery, and can be applied to other batteries that occur the voltage delay phenomenon as the lithium battery does.

### [Industrial Applicability]

The present invention is quite useful in a secure supply of electric power to an optical encoder for driving thereof even when a main power supply is shut down by a power failure.

## Claims

1. A backup power supply device configured to supply an electric power for backup to an optical encoder when a main power supply for driving the optical encoder breaks down, the backup power supply device comprising:
a battery configured to storage a DC power;
a capacitor configured to storage a DC power, the capacitor configured to supply an electric power for backup to the optical encoder when the battery cannot supply the electric power thereof;
a discharge device configured to discharge the electric power charged in the battery; and
a periodical discharge controller configured to perform control to intermittently output the electric power charged in the battery to the discharge device to consume the battery power.

2. The backup power supply device according to claim 1, further comprising
a backflow prevention circuit configured to block a discharge of the electric power charged in the capacitor when the electric power charged in the battery is supplied to the optical encoder.

3. The backup power supply device according to claim 1, further comprising
a forced discharge controller configured to output the electric power charged in the battery to the discharge device to consume the battery power when an external input is given.

4. The backup power supply device according to claim 2, further comprising
a forced discharge controller configured to output the electric power charged in the battery to the discharge device to consume the battery power when an external input is given.

5. The backup power supply device according to claim 1, wherein the battery is a lithium battery.

6. The backup power supply device according to claim 2, wherein the battery is a lithium battery.

7. The backup power supply device according to claim 3, wherein the battery is a lithium battery.

8. A power output method for outputting an electric power of a battery provided as a backup power supply device for driving an optical encoder, the method comprising:
supplying the electric power of the battery to the optical encoder when a main power supply for the optical encoder breaks down; and
intermittently outputting the electric power of the battery to a discharge device by a periodical discharge controller to consume the electric power of the battery when the optical encoder is operating by supply of an electric power of the main power supply.

9. The power output method according to claim 8, further comprising
supplying the electric power of the battery to the discharge device to consume the electric power of the battery when a forced discharge command is input by a forced discharge controller.
